# EUROPÄISCHE PATENTANMELDUNG

(11) **EP 2 262 347 A1**
(43) Veröffentlichungstag der Anmeldung: **15.12.2010**
(21) Anmeldenummer: 10184377.9
(22) Anmeldetag: 30.06.2003
(51) Int. Cl.: H05B 33/08

(54) **Stromversorgung für Lumineszenzdioden**

(30) Priorität: 04.07.2002 DE 10230103
(62) Teilanmeldung aus: 08164999.8
(71) Anmelder: Ledon Lighting Jennersdorf GmbH, 8380 Jennersdorf (AT); Tridonic AG, 8755 Ennenda (CH)
(72) Erfinder: Tasch, Stefan, 8380, Jennersdorf (AT); Zimmermann, Michael, 8888, Heiligkreuz (CH); Tobler, Felix, 8718, Schänis (CH)
(74) Vertreter: Rupp, Christian

(57) **Zusammenfassung**

Die vorliegende Erfindung beruht auf einer Regelungsschaltung (200a, 200b) zur Bereitstellung einer konstanten Stromversorgung auf Grundlage eines Wandlerprinzips, bei dem ein periodisch um einen Gleichstromwert schwankender, dreieckförmiger Wechselstrom (*I_{D}*) durch die Lumineszenzdioden (D1,...,DN) fließt. Bei diesem Verfahren ist durch eine schaltungstechnische Maßnahme dafür gesorgt, dass sowohl der Lade- als auch der Entladestrom (*I_{L1}*) eines als Speicherdrossel (L1) fungierenden, in Serie zu den Lumineszenzdioden (D1,...,DN) geschalteten induktiven Blindwiderstands (X_{L1}) zur Filterung von Netzoberwellen als Diodenstrom (*I_{D}*) durch die Lumineszenzdioden (D1,...,DN) fließt. Der Vorteil dieses Verfahrens besteht in einer erheblichen Reduzierung der Gesamtverlustleistung (*P_{v,ges}*) des LED-Beleuchtungsmoduls (100).

Nach einem Ausführungsbeispiel der Erfindung verfügt die keramische Leiterplatte (102) des erfindungsgemäßen LED-Beleuchtungsmoduls (100) über eine direkte Netzstromversorgung (104, 108), die zum Schutz vor mechanischer Beschädigung in einem transparenten Gehäuse (106) mit einer als optisch aktive Linsenfläche dienenden hochtransparenten Polymermasse (110) untergebracht ist.

## Beschreibung

Die vorliegende Erfindung bezieht sich auf eine Stromversorgung für LEDs. Dabei kommt ein Wandlerprinzip zur Anwendung, das einen periodisch um einen Gleichstromwert schwankenden, dreieckförmigen Wechselstrom durch die Lumineszenzdioden erzeugt. Durch dieses Verfahren wird dafür gesorgt, dass sowohl der Lade- als auch der Entladestrom eines induktiven Blindwiderstands im Lastkreis als Diodenstrom durch die Lumineszenzdioden fließt.

Hochleistungsfähige lichtemittierende Halbleiter-Lumineszenzdioden (engl.: "Light-Emitting Diodes", LEDs), kurz Leuchtdioden genannt, haben schon lange ihren Platz in vielen Bereichen erobert, in denen ein Bedarf an optischen Anzeigesystemen oder Beleuchtungssystemen mit geringem Energieverbrauch besteht, wie z.B. in der Verkehrs- und Signaltechnik. Durch entscheidende technische Innovationen im Bereich der lichtemittierenden Halbleiter-Bauelemente, mit Hilfe derer heute eine höhere Lichtausbeute sowie eine Ausweitung des Farbspektrums auf den gesamten Wellenlängenbereich des sichtbaren Lichts zwischen 780 nm (violett) und 380 nm (dunkelrot) erreichbar ist, erschließt sich der Optoelektronik lichttechnisch ein völlig neuer Markt.

Zur Erzielung einer gleichmäßigen Ausleuchtung von Flächen werden dabei in der Regel Streuscheiben verwendet. Aufgrund des Netzbetriebes, vor allem bei Anwendungen im Außenbereich, sind üblicherweise Leuchtengehäuse erforderlich, um die verwendeten elektronischen Bauteile vor dem Eindringen von Feuchtigkeit zu schützen.

Um die zentrale Idee der vorliegenden Erfindung zu verstehen, soll im Folgenden kurz auf die wichtigsten Merkmale konventioneller Verfahren und Technologien nach dem Stand der Technik zur Herstellung von Halbleiter-Lumineszenzdioden eingegangen werden, vor allem auf die sogenannte "Chip-on-Board" (COB)-Technologie, welche in den letzten Jahren stark an Bedeutung gewonnen hat.

Bei der "Chip-on-Board" (COB)-Technologie wird der rohe LED-Chip mit der Struktur und den Anschlüssen nach oben (engl.: "face up") mit Leitkleber auf der Leiterplatte angebracht. Dieser Vorgang wird im angloamerikanischen Sprachgebrauch als "Die Bonding" bezeichnet. Nach dem Aushärten des Klebers erfolgt in einem zusätzlichen Arbeitsschritt das Verbinden der Chipanschlüsse mit der Leiterplatte mit Hilfe eines aus der Herstellung integrierter Schaltungen bekannten Wire-Bonders. Dabei werden die einzelnen Chipanschlüsse und die Leiterplatte mit einem Golddraht verbunden. Durch die Verwendung von speziellen Leiterplatten-Materialien können hervorragende Wärmeleiteigenschaften erreicht werden. Daraus resultiert eine längere Lebensdauer und eine höhere Lichtausbeute pro Fläche. Nach Aufbringung einer polymeren Schicht ist das LED-Array vor mechanischer Beschädigung durch Erschütterung oder Vibrationen geschützt. Spezielle Leiterplatten mit Reflektorschichten dienen dabei zur Lichtbündelung und Erhöhung der Lichtstärken bei kleineren Abstrahlwinkeln.

Im Vergleich zu herkömmlichen LED-Modulen können somit durch Verwendung von Lumineszenzdioden, die mittels COB-Technologie als LED-Arrays auf einer Leiterplatte aufgebracht sind, effiziente Beleuchtungseinheiten hoher Lichtausbeute, langer Lebensdauer, platzsparender Bauweise und einem relativ geringen Kostenaufwand hergestellt werden. Aufgrund der erreichbaren Lichtstromwerte sind diese Module nicht nur als Signal- und Hinterbeleuchtungen interessant, sondern können direkt als Beleuchtungsmittel eingesetzt werden. In COB-Technologie hergestellte LED-Arrays mit einem Abstrahlwinkel von 180° erlauben eine helle Ausleuchtung von Flächen mit einer homogenen Lichtverteilung, die mit der Ausleuchtung durch eine mit 40 bis 50 mA betriebenen Beleuchtungsanlage mit Leuchtstofflampen vergleichbar ist. Ein weiterer Pluspunkt ist der um 50 % geringere Stromverbrauch gegenüber einer derartigen Beleuchtungsanlage.

Aus hochleistungsfähigen Lumineszenzdioden aufgebaute Punktlichtquellen in COB-Technologie eignen sich ideal für kleine Arbeits- und Leseleuchten, als flexibel nutzbare Lichtquellen in Spotbeleuchtungen, als zentrale Lichtquelle für Orientierungsleuchten etc.

Aus der Offenlegungsschrift DE 100 26 661 A1 ist ein universelles, kompaktes LED-Beleuchtungsmodul bekannt, das für Innen- und Außenleuchten im Netzbetrieb verwendet werden kann und ohne Verwendung weiterer Betriebsgeräte, wie z.B. Netztransformatoren oder speziell dimensionierter Schaltnetzteile, auskommt. Die als Lichtquellen vorgesehenen lichtemittierenden Halbleiter-Bauelemente werden dabei über ein Kondensatornetzteil angesteuert und mit Strom versorgt. In der bevorzugten Ausführungsform dieser Erfindung treten die lichtabstrahlenden Oberflächen der einzelnen Lumineszenzdioden aus der Vergussmasse linsenförmig hervor. Als äußere Bauform für das hierin offenbarte LED-Beleuchtungsmodul dient eine Vergussmasse (z.B. ein Gießharz) oder ein Gehäuse, in dem die elektronischen Komponenten vor Feuchtigkeitseindringung geschützt montiert sind. Das Modul kann dabei als Lampe oder Leuchte direkt an einem Stromversorgungsnetz betrieben, überall angebracht und kostengünstig hergestellt werden.

Bei herkömmlichen Kondensatornetzteilen nach dem Stand der Technik kann (im Gegensatz zu der erfindungsgemäßen elektronischen Lösung) der Effektivwert der Eingangswechselspannung variabel gewählt werden (z.B. zwischen 100 V_{AC} und 277 V_{AC}); sogar eine Versorgung des Netzteils mit Gleichspannung ist möglich.

Da jedoch bei einer Kondensatornetzteilschaltung die Größe der verwendeten Kondensatoren mit steigender Betriebsleistung stark zunimmt, können mit einem derartigen Netzteil nur geringe Leistungen bei akzeptabler Baugröße realisiert werden. Zudem verschlechtert sich die Leistung der in Kondensatornetzteilen üblicherweise verwendeten Elektrolytkondensatoren mit der Zahl der Betriebsstunden. Aus den vorstehend genannten Gründen ist für den Betrieb von Hochleistungs-LEDs (mit einer Betriebsleistung von bis zu 4 W) der Einsatz alternativer elektronischer Lösungen erforderlich.

### AUFGABE DER VORLIEGENDEN ERFINDUNG

Ausgehend von dem oben genannten Stand der Technik, widmet sich die vorliegende Erfindung der Aufgabe, eine Stromversorgung für Lumineszenzdioden bereitzustellen, die in einfacher Weise auf unterschiedliche LEDs angepasst werden kann. Darüber hinaus soll natürlich auch ein guter Wirkungsgrad erreicht werden.

Diese Aufgabe wird erfindungsgemäß durch die Merkmale der unabhängigen Patentansprüche gelöst. Vorteilhafte Ausführungsbeispiele, die den Gedanken der Erfindung weiterbilden, sind in den abhängigen Patentansprüchen definiert.

### ZUSAMMENFASSENDE DARSTELLUNG DER VORLIEGENDEN ERFINDUNG

Die vorliegende Erfindung offenbart eine Regelungsschaltung nach dem Oberbegriff des Anspruchs 1, die in einfacher Weise auf die jeweilige Stromanforderung einer LED angepasst werden kann.

Bei Verwendung des erfindungsgemäßen Schaltungsprinzips können auch mehrere in Serie geschaltete Lumineszenzdioden an Niedervoltspannungen von mehr als 30 V angeschlossen werden. Die Regelschaltung wirkt dabei als Konstantstromquelle.

Das mit Hilfe dieser Regelschaltung realisierte Verfahren arbeitet nach einem Wandlerprinzip, bei dem ein periodisch um einen Gleichstromwert schwankender, dreieckförmiger Strom durch die LED fließt. Dabei ist mit Hilfe einer schaltungstechnischen Maßnahme dafür gesorgt, dass sowohl der Lade- als auch der Entladestrom eines als Speicherdrossel in Serie zu den Lumineszenzdioden geschalteten induktiven Blindwiderstands als Diodenstrom durch die Lumineszenzdioden fließt. Der Vorteil dieses Verfahrens besteht in einer Reduzierung der Gesamtverlustleistung des LED-Beleuchtungsmoduls.

### KURZBESCHREIBUNG DER ZEICHNUNGEN

Weitere Eigenschaften, Merkmale, Vorteile und Zweckmäßigkeiten der zugrunde liegenden Erfindung resultieren aus den untergeordneten abhängigen Patentansprüchen, welche nunmehr, bezugnehmend auf die Figuren der begleitenden Zeichnungen und anhand einer detaillierten Beschreibung eines Ausführungsbeispiels der zugrunde liegenden Erfindung, erläutert werden sollen. Hierbei zeigen:
- Fig. 1: ein LED-Beleuchtungsmodul, bestehend aus einer über ein Stromversorgungsnetz mit Wechselstrom gespeis- ten Anordnung mehrerer in Serie geschalteter Lumineszenzdioden, die auf einer Leiterplatte in einer "Chip-on-Board" (COB)-Technologie als LED- Dice aufgebracht sind,
- Fig. 2a: eine erste Variante einer Regelschaltung zur Be- reitstellung einer geregelten Stromversorgung für LEDs, bei der ein im Rückkopplungszweig zur galva- nischen Entkopplung (Potenzialtrennung) verwendete Signalübertragungsglied als Optokopplerdiode reali- siert ist,
- Fig. 2b: eine zweite Variante der erfindungsgemäßen Regel- schaltung zur Bereitstellung einer geregelten Stromversorgung für LEDs, bei der ein im Rückkopp- lungszweig zur galvanischen Entkopplung (Potenzial- trennung) verwendete Signalübertragungsglied als Pegel- bzw. Potenzialversatzstufe realisiert ist und
- Fig. 3: den Zeitverlauf des durch eine Lumineszenzdiode fließenden Stromes.

### DETAILLIERTE BESCHREIBUNG DER ERFINDUNG

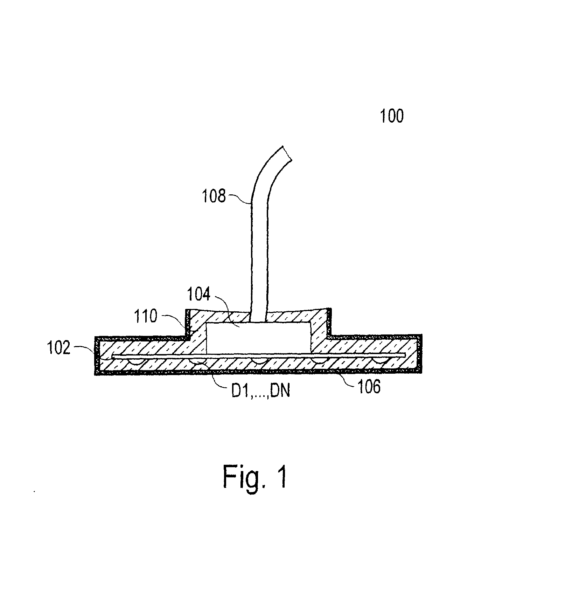

Im Folgenden werden die Funktionen der in einem Ausführungsbeispiel der vorliegenden Erfindung enthaltenen Baugruppen, wie in den Figuren 1 bis 3 abgebildet, näher beschrieben. Die Bedeutung der mit Bezugszeichen versehenen Symbole in den Figuren 1 bis 3 kann der beigefügten Bezugszeichenliste entnommen werden.

In Fig. 1 ist der prinzipielle Aufbau eines LED-Beleuchtungsmoduls 100 im Längsschnitt schematisch dargestellt. Es verfügt über eine mit Wechselstrom gespeiste Anordnung einer Anzahl von in Serie geschalteten Lumineszenzdioden Dl,...,DN, die als sogenannte LED-Dice auf einer Leiterplatte 102 in einer "Chip-on-Board" (COB)-Technologie aufgebracht sind.

Die Erfindung lässt sich indessen ebenso auf die Ansteuerung anderer Konfigurationen von LEDs und insbesondere einer einzelnen LED anwenden.

Nach einem Ausführungsbeispiel der Erfindung verfügt die wärmeleitende, keramische Leiterplatte 102 des LED-Beleuchtungsmoduls 100 über eine direkte Netzstromversorgung, bestehend aus einem Netzteil 104 und einem seitlich aus dem Netzteil 104 herausgeführten Anschlusskabel, Stecker und/oder Stecksockel 108 zum Anschluss an ein Wechselstromnetz. Die Lumineszenzdioden D1,...,DN sind dabei zum Schutz vor mechanischer Beschädigung in einem transparenten Gehäuse 106 mit einer als optisch aktive Linsenfläche dienenden hochtransparenten Polymermasse 110 untergebracht.

Zur Erzielung einer gebündelten, homogenen Lichtverteilung im Bereich der Hauptstrahlrichtungen der einzelnen Lumineszenzdioden D1,...,DN verfügt das erfindungsgemäße LED-Beleuchtungsmodul 100 darüber hinaus über sogenannte Fresnel-Linsen in Form einer Linsenplatte, welche zentrisch oberhalb einer jeden Lumineszenzdiode D1,...,DN innerhalb des transparenten Gehäuses 106 positioniert und seitlich verklebt sind.

Um auf der Seite der Leiterplatte 102, auf der die Lumineszenzdioden D1,...,DN aufgebracht sind, beim Vergießen der hochtransparenten Polymermasse 110 innerhalb des transparenten Gehäuses 106 die Entstehung von Luftblasen zu vermeiden,
sind auf der Leiterplatte 102 Löcher eingebracht. Bei der Herstellung des LED-Beleuchtungsmoduls 100 werden die einzelnen ungehäusten LED-Dice D1,...,DN im Rahmen eines Spritzgussverfahrens oder eines anderen geeigneten Gießverfahrens direkt mit der hochtransparenten Polymermasse 110 umspritzt. Die Polymermasse 110 besteht dabei aus einem thermisch gut leitenden Material, das elektrisch isolierend wirkt.

Da weißes Licht mit Hilfe einzelner Lumineszenzdioden nicht erzeugt werden kann, ist erfindungsgemäß die Zugabe eines Farbkonversionsmittels in die Polymermasse 110 im Bereich der Hauptstrahlrichtung oberhalb der Position monochromatische Photonenstrahlung im Spektralbereich der Farbe blau emittierender Lumineszenzdioden D1,...,DN vorgesehen.

Aufgrund einer platzsparenden Anordnung der verwendeten Bauteile und der Verwendung des oben erwähnten effizienten COB-Herstellungsverfahrens beträgt die Bauhöhe der Gesamtanordnung des erfindungsgemäßen LED-Beleuchtungsmoduls 100 nicht mehr als beispielsweise 1,0 cm.

Nach einem Ausführungsbeispiel der zugrunde liegenden Erfindung sind die einzelnen Lumineszenzdioden D1,...,DN dimmbar, wobei zur Dimmung der Helligkeit der von ihnen emittierten Photonenstrahlung eine Ansteuerung über Funk- oder Infrarotsignale bzw. einen an einen Bus angeschlossenen Mikrocontroller denkbar ist.

Das Netzteil 104 zur Gewährleistung einer direkten Netzstromversorgung der Leiterplatte 102 kann erfindungsgemäß in einem Spannungseingangsbereich von 100 V bis 277 V betrieben werden. Es kann dabei auch vorgesehen sein, dass das Netzteil 104 sowohl mit Wechselspannung als auch mit Gleichspannung betreibbar ist und neben dem Betrieb einzelner LEDs für den Betrieb mit seriell als auch für den Betrieb mit parallel geschalteten Lumineszenzdioden D1,...,DN verwendet werden kann.

Die Innenseiten des transparenten Gehäuses 106 (mit Ausnahme des lichtemittierenden Bereiches) bestehen erfindungsgemäß aus einem thermisch gut leitenden Material, das auf der Außenseite zur Wärmeabfuhr von einem elektrisch nicht leitenden Material überzogen ist. Dabei kann das transparente Gehäuse 106 mit Hilfe eines seitlich aus dem Gehäuse herausgeführten Steckers, Stecksockels und/oder Anschlusskabels 108 kontaktiert werden.

Nach einem Ausführungsbeispiel der zugrunde liegenden Erfindung ist dabei vorgesehen, dass um jede einzelne, als LED-Die ausgebildete Lumineszenzdiode D1,...,DN ein parabolisch oder trichterförmig ausgeformter, aus einem thermisch gut leitfähigen, hochreflektierenden Material bestehender Reflektor einer Reflektorplatte, die auf der Unterseite elektrisch isoliert ist, von oben auf die Leiterplatte 102 aufgesetzt ist. Jeder einzelne Reflektor besteht dabei aus einem Kunststoff mit verspiegelter Innenseite.

Die Rückseite der Leiterplatte 102 ist erfindungsgemäß an einen Kühlkörper angekoppelt, welcher zur Übertragung der beim Betrieb des LED-Beleuchtungsmoduls 100 entstehenden Abwärme auf das Gehäuse 106 oder eine Halterung (nicht dargestellt) dient.

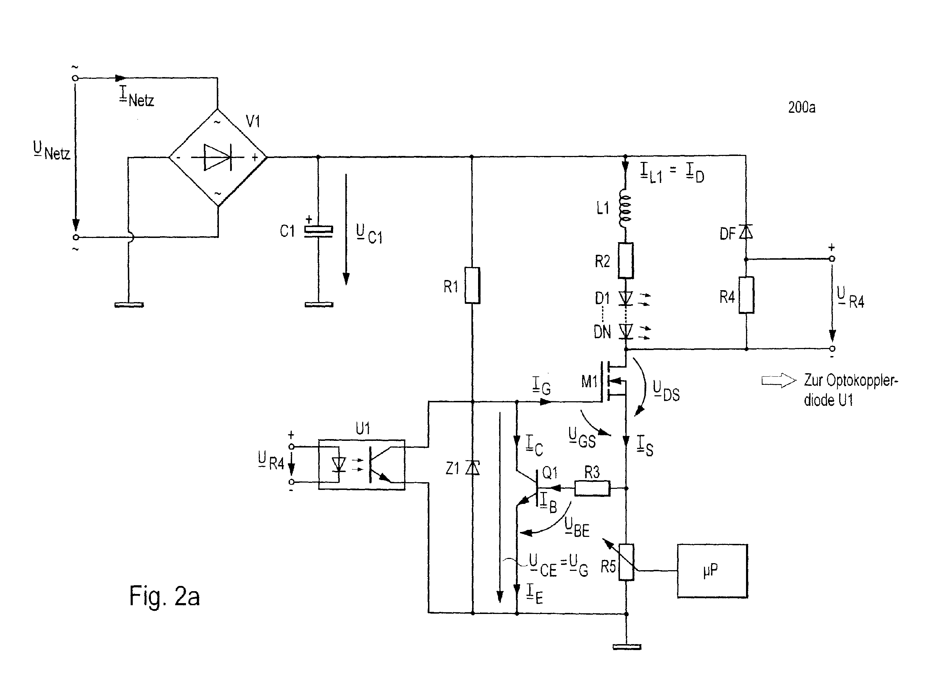

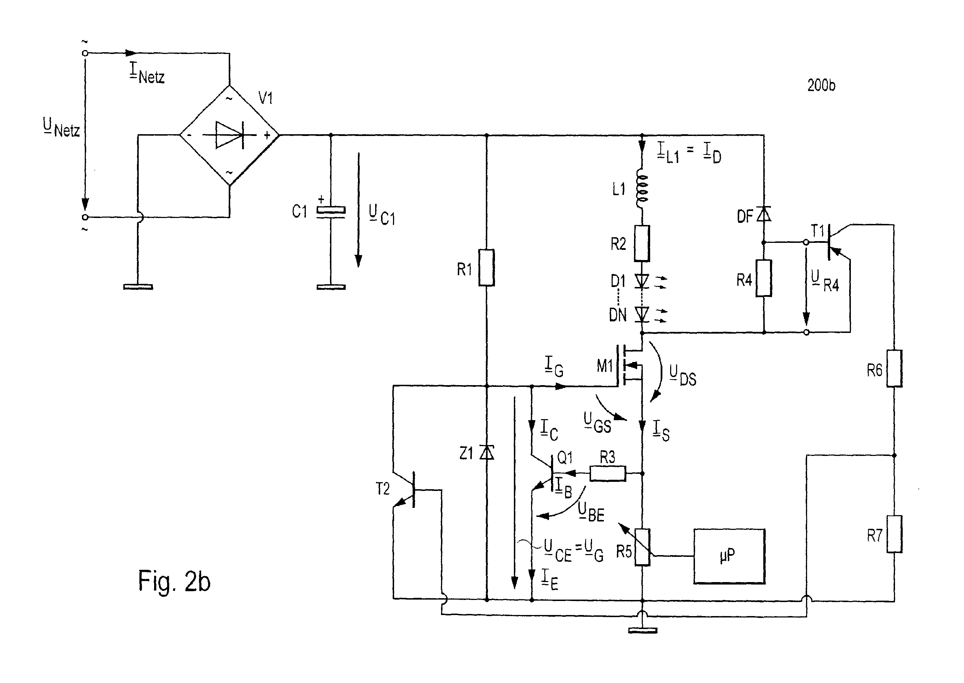

Bezugnehmend auf Fig. 2a und 2b, werden nun zwei Varianten einer erfindungsgemäßen Regelschaltung erläutert.

Über eine Gleichrichter-Vollbrückenschaltung V1 werden die positiven und/oder negativen Netzhalbwellen des von einem Stromversorgungsnetz gelieferten Wechselstroms *I_{Netz}* gleichgerichtet. An dem mit dem Masseknoten verbundenen Speicherkondensator C1 am Ausgangstor der Gleichrichter-Vollbrücke V1 liegt somit eine mit der Netzspannung *U_{Netz}* variierende, geglättete und gleichgerichtete Zwischenkreisspannung *U_{C1}* an.

Nach dem Anlegen einer geeignet dimensionierten Steuerspannung *U_{G}* an das Gate eines beispielsweise als selbstsperrender n-Kanal-MOS-Feldeffekttransistor realisierten ersten Halbleiter-Leistungsschalters M1 wird diese erste elektronisch steuerbare Schaltstufe elektrisch leitend, so dass ein Drainstrom zu fließen beginnt, der infolge der als Energiespeicher wirkenden Speicherdrossel L1 kontinuierlich ansteigt und als Diodenstrom *I_{D}* durch die Lumineszenzdioden D1,...,DN hindurchfließt. Der Anstieg dieses Diodenstroms *I_{D}* bei Ladung des Speicherdrossel L1 wird von einem ersten niederohmigen Nebenschluss-Messwiderstand R5 erfasst, der zugleich im Lastkreis des ersten Leistungsschalters M1 sowie im Steuerkreis des zweiten Leistungsschalters Q1 angeordnet und mit dem Masseknoten verbunden ist. Neben den beiden Leistungsschaltern M1 und Q1 kann erfindungsgemäß auch eine zeitabhängige Steuerung zur Umschaltung zwischen den in der Speicherdrossel L1 ablaufenden Lade- bzw. Entladevorgängen vorgesehen sein.

Dieser Nebenschluss-Messwiderstand R5 kann dabei vorzugsweise als Potentiometer zur Dimmung der dem Diodenstrom *I_{D}* [mA] proportionalen Lichtstärke *Iᵥ* [mcd] (d.h. der Helligkeit) der von den Lumineszenzdioden D1,...,DN emittierten Photonenstrahlung ausgebildet sein.

Sobald nun die Basis-Emitter-Spannung *U_{BE}* einer z.B. als bipolarer npn-Transistor ausgebildeten zweiten elektronisch steuerbaren Schaltstufe Q1 eine bestimmte Schaltschwelle erreicht, wird der Halbleiter-Leistungsschalter Q1 elektrisch leitend, so dass ein Kollektorstrom *I_{C}* zu fließen beginnt und die Gatespannung *U_{G}* der ersten elektronisch steuerbaren Schaltstufe M1 vorübergehend auf "Low"-Pegel absinkt, wodurch wiederum die Schaltstufe M1 kurzzeitig gesperrt wird. Dies hat zur Folge, dass der über die Speicherdrossel L1 aufgebaute Diodenstrom *I_{D}* durch eine Freilaufdiode DF und einen zu dieser in Serie geschalteten zweiten niederohmigen Nebenschluss-Messwiderstand R4 im Parallelzweig zur Serienschaltung der Lumineszenzdioden D1,...,DN und dem durch die Speicherdrossel L1 gebildeten induktiven Blindwiderstand X_{L1} abgeleitet wird.

Mit Hilfe dieser verhältnismäßig einfachen schaltungstechnischen Maßnahme wird eine Gefährdung des ersten Halbleiter-Leistungstransistors M1 durch die beim Abschalten des Drainstroms *I_{D}* (beim Sperren von M1) am induktiven Blindwiderstand X_{L1} abfallende Induktionsspannung *U_{L1}* vermieden, die ein Vielfaches der Betriebsspannung betragen kann.

Die an dem niederohmigen Nebenschluss-Messwiderstand R4 abfallende Spannung *U_{R4}* dient dabei zur Erfassung des durch die Schaltschwelle der zweiten elektronisch steuerbaren Schaltstufe Q1 auf einen Minimalwert begrenzten Absinkens des durch die Lumineszenzdioden D1,...,DN fließenden Diodenstroms *I_{D}* im freilaufenden Strompfad.

Nach Rückkopplung des am zweiten Messwiderstand R4 abgegriffenen, durch die Lumineszenzdioden D1,...,DN fließenden Diodenstromes *I_{D}* auf den Steuereingang der ersten Schaltstufe M1 über ein Signalübertragungsglied U1 zur galvanischen Entkopplung (Potenzialtrennung) der am zweiten Messwiderstand R4 abfallenden Spannung *U_{R4}* und der Gatespannung *U_{G}* der ersten Schaltstufe M1 wirkt dieser übersetzte, abklingende Diodenstrom *I_{D}* als "neuer" Gatestrom *I_{G}.* Das hat zur Folge, dass die Gatespannung *U_{G}* der ersten elektronisch steuerbaren Schaltstufe M1 auf dem Pegelwert "Low" verharrt und die Schaltstufe M1 daher so lange gesperrt bleibt, bis der Stromfluss durch das Signalübertragungsglied U1 unter eine bestimmte Schwelle abgesunken ist. Nachdem die Schaltstufe M1 wieder zu leiten begonnen hat, wird der oben beschriebene Vorgang in periodisch wiederkehrender Folge fortgesetzt.

Bei dem erfindungsgemäßen Verfahren fließt also sowohl der Lade- als auch der Entladestrom *I_{L1}* des induktiven Blindwiderstands X_{L1} als Diodenstrom *I_{D}* durch die Anordnung der seriell geschalteten Lumineszenzdioden D1,...,DN des erfindungsgemäßen LED-Beleuchtungsmoduls 100, so dass sich ein periodisch um einen Mittelwert pendelnder, dreieckförmiger Strom durch die LED ergibt.

Das im Rückkopplungszweig des an dem zweiten Messwiderstand R4 abgegriffenen, durch die Lumineszenzdioden D1,...,DN fließenden Stromes *I_{D}* auf den Steuereingang der ersten Schaltstufe M1 zur galvanischen Entkopplung (Potenzialtrennung) der an dem zweiten Messwiderstand R4 abfallenden Spannung *U_{R4}* und der Steuerspannung *U_{G}* der ersten Schaltstufe M1 verwendete Signalübertragungsglied U1 kann dabei vorzugsweise als Optokopplerdiode (vgl. Fig. 2a) oder als Pegelversatzstufe (vgl. Fig. 2b) ausgebildet sein. Eine Zenerdiode Z1 dient hierbei als Spannungsbegrenzer zur Stabilisierung der an den Ausgangsklemmen der Optokopplerdiode bzw. Pegelversatzstufe U1 abgreifbaren Steuerspannung *U_{G}* des ersten elektronisch steuerbaren Halbleiter-Leistungstransistors M1.

Bei der Realisierung der zweiten Variante der erfindungsgemäßen Regelschaltung 200b mit Pegel- bzw. Potenzialversatzstufe U1 sind zusätzlich zu den für die erste Variante 200a mit Optokopplerdiode benötigten Bauelementen zwei Transistorstufen T1 und T2 sowie ein Spannungsteiler, der durch die beiden Widerstände R6 und R7 gebildet wird, erforderlich.

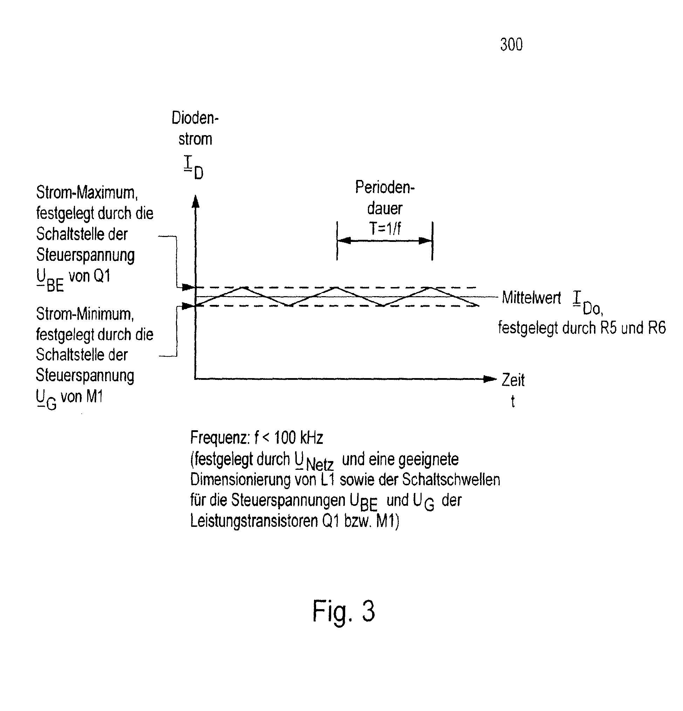

In Fig. 3 ist der zeitliche Verlauf des durch die Lumineszenzdioden D1,...,DN fließenden Diodenstroms *I_{D}* abgebildet. Es handelt sich dabei, wie dargestellt, um einen periodisch um einen Mittelwert schwankenden, dreieckförmigen Wechselstrom, dessen Frequenz durch die Schaltschwellen der zur Steuerung der beiden Leistungstransistoren M1 und Q1 benötigten Steuerspannungen *U_{G}* bzw. *U_{BE},* die Größe der Induktivität der den Lumineszenzdioden D1,...,DN vorgeschalteten Drosselspule L1 und den Momentanwert der am Speicherkondensator C1 abfallenden Zwischenkreisspannung *U_{C1}* bestimmt wird. Für das in Fig. 3 skizzierte Beispiel wurden diese Parameter so dimensioniert, dass der resultierende Diodenstrom *I_{D}* vorzugsweise eine Frequenz von weniger als 100 kHz aufweist.

Der den Mittelwert des erhaltenen Diodenstroms *I_{D}* bildende Gleichstrom-Offset kann dabei durch eine geeignete Dimensionierung der beiden Nebenschluss-Messwiderstände R4 und R5 eingestellt werden, um die Stromquelle an die jeweilige LED anzupassen. Auf diese Weise wird eine kostengünstige Anpassung des Diodenstroms *I_{D}* an unterschiedliche LEDs ohne schaltungstechnische Zusatzmaßnahmen ermöglicht.

Im Gegensatz zu herkömmlichen Kondensatornetzteilen nach dem Stand der Technik ist die erfindungsgemäße Lösung wesentlich platzsparender. Darüber hinaus sind auch anwenderspezifische integrierte Schaltungen (engl.: "Application-Specific Integrated Circuits", ASICs) mit einem vergleichsweise geringen Platzbedarf denkbar.

## Patentansprüche

1. LED-Beleuchtungsmodul,
aufweisend eine oder mehrere LEDs (D1, ..., DN), die auf einer Leiterplatte (102) aufgebracht ist/sind und über ein Stromversorgungsnetz mit Wechselstrom (INetz) gespeist wird/werden, wobei
- wenigstens eine LED (D1, ..., DN) eine blau emittierende LED (D1, ..., DN) ist, welche mittels eines über der LED (D1, ..., DN) angeordneten Farbkonversionsmaterials weißes Licht erzeugt, und
- das LED-Beleuchtungsmodul (100) in einem vorzugsweise transparenten Gehäuse (106) untergebracht ist und über eine Stromversorgungsschaltung (200a/b) verfügt, wobei die Stromversorgungsschaltung (200a/b) auf der von der oder den LED abgewandten Seite der Leiterplatte (102) angeordnet ist;
wobei die Stromversorgungsschaltung aufweist:
- mindestens einen in Serie zu einer Schaltstufe (M1, Q1) geschalteten induktiven Blindwiderstand (XL1),
- wenigstens eine Schaltstufe (M1, Q1) zur Umschaltung zwischen in dem induktiven Blindwiderstand (XL1) ablaufenden Lade- bzw. Entladevorgängen vorzugsweise bei Über- bzw. Unterschreiten von Schwellwerten ihrer jeweiligen Steuerspannung (U G, U BE),
- einen Strompfad für wenigstens einen Teil des dem induktiven Blindwiderstand (XL1) bei Sperrung der Schaltstufe (M1) an die LED (D1, ..., DN) abgegebenen Entladestroms.

2. Stromversorgung für wenigstens eine Lumineszenzdiode (D1,...,DN), aufweisend:
- mindestens einen als Speicherdrossel (L1) in Serie zu der Lumineszenzdiode (D1,...,DN) geschalteten induktiven Blindwiderstand (X_{L1}),
- wenigstens eine Schaltstufe (M1, Q1) zur Umschaltung zwischen den in der Speicherdrossel (L1) ablaufenden Lade- bzw. Entladevorgängen, derart, dass durch die Lumineszenzdiode ein periodisch um einen Gleichstromwert schwankender, ansteigender und abfallender Strom fliesst, und
- einen parallel zur Serienschaltung der Lumineszenzdioden (D1,...,DN) und der Speicherdrossel (L1) geschalteten freilaufenden Strompfad für wenigstens einen Teil des von der Speicherdrossel (L1) bei Sperrung der ersten Schaltstufe (M1) an die Lumineszenzdioden (D1,...,DN) abgegebenen Entladestroms, und
- Mittel zur Messung des bei gesperrter Schaltstufe durch die Lumineszenzdiode fliessenden abfallenden Stroms.

3. Stromversorgung nach Anspruch 2,
**gekennzeichnet durch**
einen ersten Nebenschluss-Messwiderstand (R5) zur Erfassung des **durch** die Lumineszenzdioden (D1,...,DN) während eines in der Speicherdrossel (L1) ablaufenden Ladevorgangs fließenden Diodenstroms (*I_{D}*).

4. Stromversorgung nach Anspruch 3,
**dadurch gekennzeichnet, dass**
der erste Nebenschluss-Messwiderstand (R5) zum Dimmen der Lumineszenzdioden (D1,...,DN) einstellbar ist.

5. Stromversorgung nach einem der Ansprüche 1 bis 4, **gekennzeichnet durch**
einen zweiten Nebenschluss-Messwiderstand (R4) zur Erfassung des **durch** die Lumineszenzdioden (D1,...,DN) während eines in der Speicherdrossel (L1) ablaufenden Entladevorgangs fließenden Diodenstroms (*I_{D}*).

6. Stromversorgung nach Anspruch 5,
**gekennzeichnet durch**
ein zur galvanischen Entkopplung der an dem zweiten Messwiderstand (R4) abfallenden Spannung und der Steuerspannung (*U_{G}*) der ersten Schaltstufe (M1) dienendes Signalübertragungsglied (U1) zur Rückkopplung des an dem zweiten Messwiderstand (R4) abgegriffenen, **durch** die Lumineszenzdioden (D1,...,DN) fließenden Stromes (*I_{D}*) auf den Steuereingang der ersten Schaltstufe (M1).

7. Stromversorgung nach Anspruch 6,
**dadurch gekennzeichnet, dass**
es sich bei dem zur Potenzialtrennung eingesetzten Signalübertragungsglied (U1) um eine Optokopplerdiode handelt.

8. Stromversorgung nach Anspruch 6,
**dadurch gekennzeichnet, dass**
es sich bei dem zur Potenzialtrennung eingesetzten Signalübertragungsglied (U1) um eine Pegelversatzstufe handelt.

9. Stromversorgung nach einem der Ansprüche 1 bis 8, **gekennzeichnet durch**
eine Zenerdiode (Z1) als Spannungsbegrenzer zur Stabilisierung der an den Ausgangsklemmen der Optokopplerdiode, Pegel- bzw. Potenzialversatzstufe (U1) abgreifbaren Steuerspannung (*U_{G}*) des ersten elektronisch steuerbaren Halbleiter-Leistungstransistors (M1).

10. Stromversorgung nach einem der Ansprüche 1 bis 9, **gekennzeichnet durch**
eine antiparallel zu der Serienschaltung der Lumineszenzdioden (D1,...,DN) und der Speicherdrossel (L1) geschaltete Freilaufdiode (DF) im freilaufenden Strompfad.

11. Stromversorgung nach einem der Ansprüche 1 bis 10, **gekennzeichnet durch**
ein Potentiometer (R3) als Vorwiderstand im Steuerkreis des ersten Halbleiter-Leistungstransistors (M1) zur Dimmung der dem Diodenstrom (*I_{D}*) proportionalen Lichtstärke (*Iᵥ*) der von den Lumineszenzdioden (D1,...,DN) emittierten Strahlung.

12. Stromversorgung nach einem der Ansprüche 1 bis 11, **gekennzeichnet durch**
eine zeitabhängige Steuerung zur Umschaltung zwischen den in der Speicherdrossel (L1) ablaufenden Lade- bzw. Entladevorgängen.

13. Stromversorgung nach einem der vorhergehenden Ansprüche,
wobei die Helligkeit der Lumineszenzdiode über Funk- oder Infrarotsignale ansteuerbar ist.

14. Verfahren zur Stromversorgung wenigstens einer Lumineszenzdiode, wobei das Verfahren folgende Schritte aufweist:
- Laden einer Speicherdrossel, die in Serie zu der Lumineszenzdiode geschaltet ist, durch Einschalten einer Schaltstufe,
- Sperren der Schaltstufe, so dass sich die Speicherdrossel über einen parallel zur Serienschaltung der Lumineszenzdiode und der Speicherdrossel geschalteten freilaufenden Strompfad entlädt,
- Messung des bei gesperrter Schaltstufe durch die Lumineszenzdiode fließenden abfallenden Stroms,
- Einschalten der Schaltstufe, sobald der gemessene abfallende Strom durch die Lumineszenzdiode einen Schwellenwert erreicht hat,
so dass sich durch die Lumineszenzdiode periodisch ein um einen Gleichstromwert schwankender ansteigender und abfallender Strom einstellt.

15. Verfahren nach Anspruch 14,
**dadurch gekennzeichnet, dass**
der den Mittelwert des resultierenden dreieckförmigen Diodenstroms (*I_{D}*) bildende Gleichstrom-Offset einstellbar ist.

16. Verfahren nach Anspruch 14 oder 15,
wobei die Helligkeit der Lumineszenzdiode über Funk- oder Infrarotsignale ansteuerbar ist.
